# EUROPÄISCHE PATENTANMELDUNG

(11) **EP 2 703 698 A1**
(43) Veröffentlichungstag der Anmeldung: **05.03.2014**
(21) Anmeldenummer: 12182953.5
(22) Anmeldetag: 04.09.2012
(51) Int. Cl.: F16K 1/44, F16K 39/02, F16K 47/00, F01D 17/14

(54) **Kombiniertes Stell- und Schnellschlussventil für eine Strömungsmaschine**

(71) Anmelder: Siemens Aktiengesellschaft, 80333 München (DE)
(72) Erfinder: Balkowski, Ingo, 47647 Kerken (DE); Deister, Frank, 47877 Willich (DE); Musch, Christian, 45259 Essen (DE); Ruda, Stanislaw, 47447 Moers (DE); Schrey, Albert, 47647 Kerken (DE); Zhou, Xiaoping, 45145 Essen (DE); Zimmer, Gerta, 45468 Mülheim an der Ruhr (DE)

(57) **Zusammenfassung**

Die Erfindung betrifft ein Ventil (1) für eine Strömungsmaschine umfassend ein Ventilgehäuse (2) mit einem Dampfeinlass (3) und einen Dampfauslass (4), wobei ein Ventilsitz (7) innerhalb des Ventilgehäuses (2) angeordnet ist, wobei der Ventilkörper (10) gegen den Ventilsitz (7) berührend verschiebbar ausgebildet ist, wobei der Ventilsitz (7) im Wesentlichen rotationssymmetrisch ausgebildet ist und im Querschnitt gesehen zum Ventilkörper (10) hin einen kreisförmigen Verlauf aufweist und entgegen dem Ventilkörper (10) hin gesehen einen flacheren Verlauf aufweist.

## Beschreibung

Die Erfindung betrifft ein Ventil für eine Strömungsmaschine, umfassend ein Ventilgehäuse mit einem Dampfeinlass und einen Dampfauslass, wobei ein Ventilsitz innerhalb des Ventilgehäuses angeordnet ist, wobei der Ventilkörper gegen den Ventilsitz berührend verschiebbar ausgebildet ist, wobei der Ventilsitz im Wesentlichen rotationssymmetrisch ausgebildet ist.

In Kraftwerksanlagen, bei denen Dampfturbinen eingesetzt werden, wird ein Strömungsmedium wie z.B. Wasserdampf bei hohen Temperaturen und Drücken über einen Einströmbereich in die Dampfturbine geleitet. Die hohen Temperaturen und Drücke erfordern einen sorgfältigen und sicheren Mechanismus für die Ventile, die für eine sichere Zufuhr des Dampfes in die Dampfturbine verantwortlich sind. Im Wesentlichen wird unterschieden zwischen Schnellschluss- und Regelventilen. Schnellschlussventile schließen die Dampfzufuhr im Falle einer Störung schlagartig zu. Ein Regelventil regelt die Dampfzuführung kontinuierlich nach bestimmten Regelparametern.

Es sind kombinierte Schnellschluss- und Regelventile bekannt, bei denen das Regelventil und das Schnellschlussventil in einem gemeinsamen Ventilgehäuse untergebracht sind. Der Regelventilkörper liegt stromabwärts vor dem Schnellschlussventilkörper und weist einen gemeinsamen Ventilsitz auf. Es hat sich aber gezeigt, dass diese Ventilform bei gedrosselter Regelventilstellung eine Vibrationsneigung aufweist. Dadurch können Schäden durch Abnutzung und Wechselbeanspruchung entstehen, die vor allem bei längerem Teillastbetrieb auftreten können.

Mit der Erfindung wird hier Abhilfe geschaffen.

Es ist Aufgabe der Erfindung, ein Ventil für eine Strömungsmaschine anzugeben, bei der die Vibrationsneigung minimiert ist.

Gelöst wird diese Aufgabe durch ein Ventil für eine Strömungsmaschine umfassend ein Ventilgehäuse mit einem Dampfeinlass und einen Dampfauslass, wobei ein Ventilsitz innerhalb des Ventilgehäuses angeordnet ist, wobei der Ventilkörper gegen den Ventilsitz berührend verschiebbar ausgebildet ist, wobei der Ventilsitz im Wesentlichen rotationssymmetrisch ausgebildet ist und im Querschnitt gesehen zum Ventilkörper hin einen kreisförmigen Verlauf aufweist und entgegen dem Ventilkörper hin gesehen einen flacheren Verlauf aufweist.

Die Verringerung der Oberflächenkrümmung des Ventilsitzes im Bereich des Schnellschlussventils mit einem anschließenden geraden Verlauf zum Ringraum reduziert die Ablöseneigung des Wandstrahls im hinteren Sitzbereich.

Der flachere Kegelwinkel des Schnellschlussventils und die Ausbildung der Kegelspitze des Stellventils bewirkt eine definierte und gut geführte Diffusorströmung im Bereich des Ventils zwischen der Ventilmitte und der Einströmung in den Ringraum des Schnellschlussventils. Diese Maßnahme ist vor allem für den Volllastfall vorteilhaft.

Die exentrische Einströmung in den Ringraum des Schnellschlussventils reduziert die Strömungsfluktuationen in den Ringraum und stabilisiert somit auch die Strömung am hinteren Teil des Ventilsitzes. Dies gilt vor allem für den Volllastfall.

Die Schwingungseigenschaft wird deutlich verbessert und trägt zum sicheren Betrieb der Ventilkombinationen bei.

Die Erfindung wird nun anhand eines Ausführungsbeispiels näher beschrieben.

Es zeigt:
- Figur: eine Querschnittsansicht eines erfindungsgemäßen Ventils.

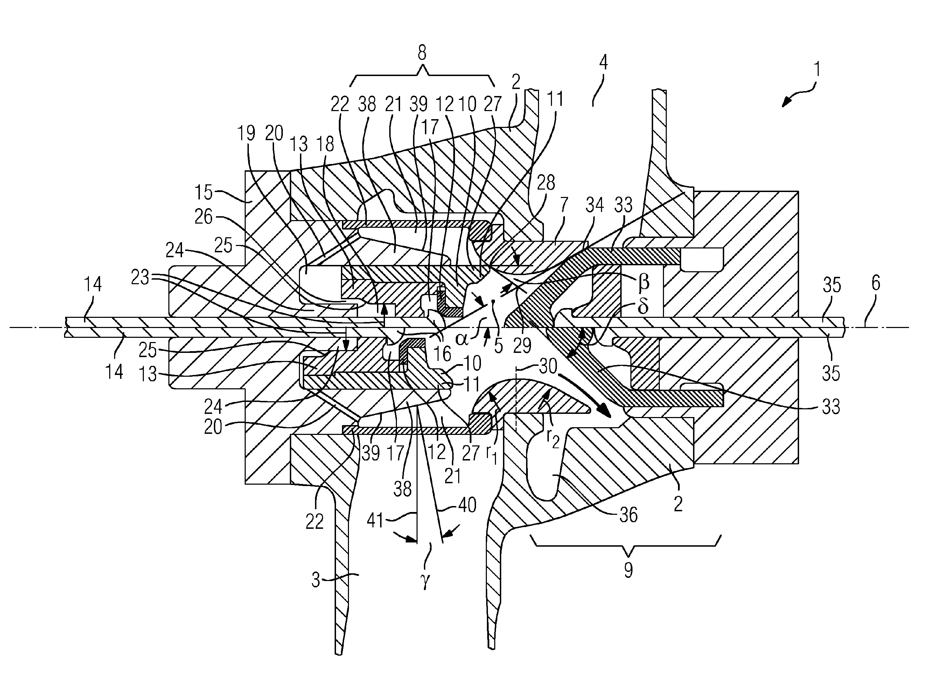

Die Figur zeigt in schematischer Weise ein Ventil 1 für eine Strömungsmaschine. Die Strömungsmaschine kann bspw. eine Dampfturbine sein. Das Ventil 1 umfasst ein Ventilgehäuse 2, das in ein Ventilgehäuse-Oberteil und in ein Ventilgehäuse-Unterteil aufgeteilt ist. Das Ventilgehäuse 2 umfasst einen Dampfeinlass 3, der im Ventilgehäuse-Unterteil angeordnet ist und zum Führen von Dampf ausgebildet ist. Des Weiteren umfasst das Ventilgehäuse 2 im Ventilgehäuse-Oberteil einen Dampfauslass 4. Ein einströmender Dampf strömt über den Dampfeinlass 3 über das Ventilinnere 5 zum Ventilauslass 4. Dabei durchströmt der Dampf einen um eine Längsachse 6 rotationssymmetrisch ausgebildeten Ventilsitz 7. Im Inneren des Ventils 1 ist eine Stellventilanordnung 8 (links vom Ventilsitz 7) und eine Schnellventilanordnung 9 (rechts vom Ventilsitz 7) angeordnet.

Der Ventilsitz 7 ist innerhalb des Ventilgehäuses 2 angeordnet. Die Stellventilanordnung 8 umfasst einen Ventilkörper 10, der einen Ventilkegel 11, einen (im Querschnitt gesehen) L-förmigen Vorhubanschlag 12 und einer Stellventilbuchse 13 aufweist. Der Ventilkörper 10 ist um eine Stellventil-Antriebsspindel 14 ausgebildet. Die Stellventil-Antriebsspindel 14 ist innerhalb eines Stellventil-Deckels 15 beweglich geführt. Die Bewegung der Stellventil-Antriebsspindel 14 erfolgt dabei in Richtung der Längsachse 6. Die Stellventil-Antriebsspindel 14 ist endseitig mit einem Vorsprung 16 ausgebildet, der an dem Vorhubanschlag 12 dichtend anliegt. Der Vorsprung 16 ist rotationssymmetrisch ausgebildet, so dass an der Kontaktstelle zwischen dem Vorhubanschlag 12 und dem Vorsprung 16 eine dichtend abgeschlossene Fläche ausgebildet ist. Zwischen dem Vorhubanschlag 12 und der Stellventilbuchse 13 ist ein Vordruckraum 17 ausgebildet.

Die Figur stellt oberhalb der Längsachse 6 das Ventil 1 im geschlossenen und unterhalb der Längsachse 6 im geöffneten Zustand dar. Im geschlossenen Zustand ist an der Kontaktstelle zwischen dem Vorsprung 16 und dem Vorhubanschlag 12 die Vordruckkammer 17 von dem Ventilinneren 5 strömungstechnisch getrennt. Zwischen der Stellventil-Antriebsspindel 14 und der Stellventilbuchse 13 ist eine mittlere Druckkammer 18 ausgebildet, die über nicht näher dargestellte strömungstechnische Verbindungen mit der Vordruckkammer 17 verbunden ist. Des Weiteren sind der Stellventildeckel 15 und die Stellventilbuchse 13 sowie der Ventilkörper 10 derart ausgebildet, dass zwischen dem Stellventildeckel 15 und dem Ventilkörper 10 eine hintere Druckammer 19 ausgebildet ist, die strömungstechnisch über eine Verbindung 20 mit dem Ringraum 21 verbunden ist.

In dem Ringraum 21 befindet sich ein Dampf der über den Dampfeinlass 3 in das Ventilgehäuse 2 einströmt. Bevor der Dampf über den Dampfeinlass 3 in den Ringraum 21 gelangt, strömt er durch ein Dampfsieb 22. Die mittlere Druckkammer 18 ist mit der hinteren Druckkammer 19 strömungstechnisch verbunden. Die Stellventilbuchse 13 ist dabei derart ausgebildet, dass eine strömungstechnische Verbindung zwischen der hinteren Druckkammer 19 und der mittleren Druckkammer 18 bei geöffneter Ventilstellung unterbrochen ist (gezeigt im unteren Teil der Längsachse 6). Dies ist daran zu erkennen, dass die mittlere Druckkammer 18 keine Verbindung zur hinteren Druckkammer 19 aufweist, da ein erster Radius 23 genauso groß ist wie der Radius eines Begrenzungsvorsprungs 24 des Stellventil-Deckels 15.

Die Stellventil-Antriebsspindel 14 ist innerhalb des Ventildeckels 15 geführt. Der Ventilkörper 10 ragt hierbei in die hintere Druckkammer 19. Die Innenfläche 25 der Stellventilbuchse 13 ist stufenartig konturiert. Für kleine Ventilöffnungen (obere Hälfte der Figur) ist die Höhe des Kanals 26, der zwischen der Stellventil-Antriebsspindel 14 bzw. dem Begrenzungsvorsprung 24 und der Stellventilbuchse 13 ausgebildet ist, vergleichsweise groß, was einen möglichst großen Druckausgleich zwischen der hinteren Druckkammer 19 und der mittleren Druckkammer 18 ermöglicht. Dadurch nimmt die Druckkraft auf den Ventilkörper 10 ab. Dagegen sollte die Höhe des Kanals 26 für große Ventilöffnungen (unterhalb Längsachse 6 dargestellt) möglichst klein sein, um den Druck in der hinteren Druckkammer 19 aufzustauen. Die Folge ist, dass die Druckkraft auf den Ventilkörper 10 vergrößert wird.

Die Konturierung der Innenfläche der Stellventilbuchse 13 ist daher stufenartig ausgebildet. Dadurch wird für die geöffnete Ventilstellung (siehe unterhalb Längsachse 6) die hintere Stirnfläche des Ventilkörpers 10 um die in Längsachse 6 gezeigte Richtung projektierte Fläche der stufenartigen Konturierung vergrößert. Weil auf dieser zusätzlichen Fläche der erhöhte Druck der hinteren Druckkammer 19 wirkt, wird die Druckkraft auf den Ventilkörper 10 in Schließrichtung deutlich vergrößert. Dadurch wird ein Schwingen des Ventilkörpers 10 verhindert.

Der Radius 23 der kreisförmigen Innenfläche 25 wird in Richtung zum Ventilsitz 7 geringer und an einer Stelle sogar stufenartig ausgebildet. Die strömungstechnische Verbindung zwischen dem Vordruckraum 17 und dem mittleren Druckraum 18 ist als Bohrung ausgeführt.

Der Ventilkegel 11 weist einen rotationssymmetrischen Ventilkörper-Anpassteil 27 auf, der eine ringförmige Berührungsfläche 28 zum Ventilsitz 7 darstellt. Der Ventilkörper-Anpassteil 27 ist somit als ein abgeschnittener Kegel aufzufassen, wodurch der Raum im Ventilinneren 5 vergrößert ist. Der Ventilkörper-Anpassteil 27 ist dadurch im Wesentlichen als ein Rohr ausgebildet, wobei die Ausführungsform derart gestaltet ist, dass der Vorhub-Anschlag 12 am Ventilkegel 11 angepasst ist. An der Berührungsfläche 28 ist eine Berührungstangente 29 definiert, die gegenüber der Längsachse 6 um den Winkel β geneigt ist. Der Winkel β kann hierbei Werte zwischen 30° und 50°, insbesondere 42° annehmen. Der Winkel β kann in alternativen Ausführungsformen einen Winkel zwischen 25° und 55° betragen.

Der Ventilsitz 7 ist derart ausgebildet, dass er im Wesentlichen rotationssymmetrisch zur Längsachse 6 ausgebildet ist und im Querschnitt gesehen zum Ventilkörper 10 hin einen kreisförmigen Verlauf aufweist und entgegen dem Ventilkörper 10 hin gesehen einen flacheren Verlauf aufweist. Mit anderen Worten: der Ventilsitz kann in gedachte zwei Gebiete aufgeteilt werden, die im Wesentlichen an der Stelle der maximalen Höhe (gestrichelte Linie 30) angeordnet ist. Der linke Teil der gestrichelten Linie 30 kann durch einen ersten Radius R1 (31) beschrieben werden, wobei der rechte Teil des Ventilsitzes 7 durch einen Radius R2 (32) beschrieben werden kann, wobei R2 größer als R1 ist und dadurch der Ventilsitz 7 asymmetrisch zur gestrichelten Linie 30 ausgebildet ist. Der Verlauf rechts der gestrichelten Linie 30 des Ventilsitzes 7 ist daher flacher als der Bereich links der gestrichelten Linie 30. Die gestrichelte Linie 30 ist aus Gründen der Übersichtlichkeit deswegen nur unterhalb der Längsachse 6 in der Figur gezeigt.

Das Ventil 1 umfasst ferner eine Schnellschlussanordnung 9, die im Wesentlichen durch einen Schnellschluss-Ventilkegel 33 dargestellt ist. Auch hier ist oberhalb der Längsachse 6 das Ventil 1 im geschlossenen und unterhalb der Längsachse 6 im geöffneten Zustand dargestellt. Im geschlossenen Zustand (oberhalb der Längsachse 6) liegt der Schnellschluss-Ventilkegel 33 an einer zweiten Berührungsfläche 34 am Ventilsitz 7 an. Der Schnellschluss-Ventilkegel 33 ist zum schnellen Schließen des Ventils 1 ausgebildet und wird ebenfalls über eine eigene Schnellschluss-Antriebsspindel 35 bewegt. Durch den Verlauf des stumpf ausgebildeten Ventilkegels 11 wird die Spitze des Schnellschluss-Ventilkegels 33 flacher ausgeführt.

Ein Winkel α, der zwischen einer Tangente auf dem Schnellschluss-Ventilkegel 33 und der Längsachse 6 gebildet ist, kann Werte zwischen 20° und 40°, insbesondere 30° annehmen. Aus Gründen der Übersichtlichkeit wegen ist nur im unteren Teil der Figur der Winkel α gezeichnet.

Der Neigungswinkel des Schnellschluss-Ventilkörpers 33 nimmt Werte zwischen 30° und 50°, insbesondere 42° an.

Der Dampf strömt über den Dampfeinlass 3 in das Ventilinnere 5 und wird am Ventilsitz 7 in einen Ringraum 36 umgelenkt. Die Umlenkung am Ventilsitz 7 ist durch einen Doppelpfeil 37 dargestellt. Die Umlenkung am Ventilsitz 7 erfolgt hierbei exzentrisch.

Der Ventilkörper 10 ist im Stellventildeckel 15 in Führungen 38 beweglich angeordnet. Die Führungen 38 sind rotationssymmetrisch um den Ventilkörper 10 angeordnet und weisen eine Führungsoberfläche 39 auf. Die Normale 40 der Führungsfläche 39 ist um einen Winkel γ zur Strömungsrichtung 41 eines in Betrieb in den Dampfeinlass 3 einströmenden Dampfes geneigt. Der Winkel γ kann hierbei Werte zwischen 5° und 15°, insbesondere 10° annehmen. In alternativen Ausführungsformen kann der Winkel γ einen Wert zwischen 1° und 20° annehmen.

Um die Führung 38 ist das Dampfsieb 22 angeordnet.

## Patentansprüche

1. Ventil (1) für eine Strömungsmaschine
umfassend ein Ventilgehäuse (2) mit einem Dampfeinlass (3) und einen Dampfauslass (4),
wobei ein Ventilsitz (7) innerhalb des Ventilgehäuses (2) angeordnet ist,
wobei der Ventilkörper (10) gegen den Ventilsitz (7) berührend verschiebbar ausgebildet ist,
wobei der Ventilsitz (7) im Wesentlichen rotationssymmetrisch ausgebildet ist und im Querschnitt gesehen zum Ventilkörper (10) hin einen kreisförmigen Verlauf aufweist und entgegen dem Ventilkörper (10) hin gesehen einen flacheren Verlauf aufweist.

2. Ventil (1) nach Anspruch 1,
mit einem zum Ventilkörper (10) entgegengesetzt angeordneten Schnellschlussventil-Kegel (33), der zum Schließen des Ventils (1) am Ventilsitz (7) anliegt.

3. Ventil (1) nach Anspruch 1 oder 2,
wobei die Neigung α der Tangente gebildet am Berührungspunkt zwischen dem Schnellschlussventil-Kegel (33) und des Ventilssitzes (7) Werte zwischen 20° und 40°, insbesondere 30° annimmt.

4. Ventil (1) nach Anspruch 3,
wobei die Neigung α der Tangente gebildet am Berührungspunkt zwischen dem Ventilkörper (10) und dem Ventilsitz (7) Werte zwischen 30° und 50°, insbesondere 42° annimmt.

5. Ventil (1) nach einem der vorhergehenden Ansprüche,
wobei das Ventil (1) zum Betrieb in einer Dampfturbine ausgebildet ist.

6. Ventil (1) nach einem der vorhergehenden Ansprüche,
wobei ein Neigungswinkel des Schnellschlussventil-Kegels (33) einen Wert zwischen 30° und 50°, insbesondere 42° annimmt.

7. Ventil (1) nach einem der vorhergehenden Ansprüche,
wobei am Schnellschlussventilkörper (33) ein Ringraum gebildet ist, in dem im Betrieb ein Dampf am Ventilsitz (7) in den Ringraum strömt, wobei die Einströmung in den Ringraum exzentrisch erfolgt.
